# EUROPÄISCHE PATENTSCHRIFT

(11) **EP 1 695 006 B1**
(45) Veröffentlichungstag und Bekanntmachung des Hinweises auf die Patenterteilung: **25.04.2007**
(21) Anmeldenummer: 04803878.0
(22) Anmeldetag: 15.12.2004
(51) Int. Cl.: F21S 10/00, B05B 17/08

(54) **LICHTFLUTER MIT VERNEBLER**
FLOODLIGHT WITH ATOMISER
DISPOSITIF DE PROJECTION D'ECLAIRAGE DOTE D'UN ATOMISEUR

(30) Priorität: 19.12.2003 DE 10359778
(43) Veröffentlichungstag der Anmeldung: 30.08.2006
(73) Patentinhaber: Klarhorst, Günter, 33699 Bielefeld (DE)
(72) Erfinder: Klarhorst, Günter, 33699 Bielefeld (DE)
(74) Vertreter: Hanewinkel, Lorenz
(86) Internationale Anmeldenummer: PCT/EP2004/014256
(87) Internationale Veröffentlichungsnummer: WO 2005/061954

(56) Entgegenhaltungen:
- DE-C- 354 383
- DE-U1- 20 216 671
- DE-U1- 29 713 945

## Beschreibung

Die Erfindung bezieht sich auf einen Lichtfluter in einer flüssigkeitsgefüllten Schale mit einem mittig angeordneten Vernebler, wobei eine daran fest installierte Lichtquelle in einem transparenten, horizontalen Ring um den Vernebler erhöht angebracht ist und eine aktive Fläche des Verneblers freigehalten ist.

Ein derartiger Lichtfluter ist aus der DE 202 16 671 U1 bekannt. Dieser besteht aus einer unten geschlossenen Schale für eine Flüssigkeit, in die ein kristallartiger Halter eines Verneblers und einer Beleuchtung hineingelegt ist, wobei deren Stromversorgung in die Schale über deren Rand geleitet ist. Die Beleuchtung ist in Bohrungen eingesetzt, die von unten in den Halter eingebracht sind. Der Vernebler ist tiefer als die Leuchtmittel, wie Glühbirnen oder Leuchtdioden, im Halter angeordnet und durch eine Bohrung von oben für den Flüssigkeitsaustritt und den Nebelaustritt zugänglich. In einer Ausführung ist ein Reflektor auf Abstandshaltern über dem Leuchtenhalter angeordnet. Eine einfache Montage sowie Abdichtung und Demontage der Bauteile in dem Halter ist nicht vorgesehen.

Weiterhin ist aus der DE 201 03 621 U1 eine von unten beleuchtete mit Flüssigkeit zu beschickende Schale bekannt, in die ein Vernebler hineingelegt ist, wobei deren Zuleitung über den Schalenrand führt. Die Beleuchtung der Schale von unten macht diese Leuchte für die Anordnung auf einem hohen Ständer ungeeignet.

Weiterhin ist ein fest installierter Vernebler in einer flüssigkeitsgefüllten Schale aus der deutschen Anmeldung DE 297 13 945 bekannt. Diese Schale weist einen Fuß auf, der eine Lichtquelle enthält. Deshalb wird das Licht im wesentlichen nach oben abgegeben. Steht der Fuß auf einem Möbelstück, können durch den Niederschlag des Nebels auf dem Möbel Feuchtigkeitsschäden entstehen.

Es ist Aufgabe der Erfindung, den eingangs bezeichneten Lichtfluter zu verbessern, so daß er einfach zu montieren und zu demontieren ist und eine gute Beleuchtung des Nebels über und unter der Schale gewährleistet.

Gelöst wird diese Aufgabe dadurch, daß
- der Lichtfluter auf einem Ständer mit einem Schalenhalter abgedichtet verschraubt mittig befestigt ist,
- der Ring sich nach oben gewölbt über einen Lampenhalter erstreckt und diesen mittels Dichtungen abgedichtet im Schalenhalter verschraubt umschließt,
- der Vernebler in eine Dichtung eingespannt mit einem Schraubring unter dem Lampenhalter gehalten ist und
- dadurch unter dem Vernebler sowie unter dem Lampenhalter in dem Schalenhalter ein abgedichteter Raum für eine Kabelzuführung freigehalten ist, deren Leitungen durch den Ständer geführt sind.

Eine Ausführungsform des Lichtfluters mit Vernebler ist in den Unteransprüchen dargestellt.

Die Lichtquelle ist vorteilhafterweise fest in der Schale installiert. Damit ergibt sich keine Veränderung der Lichtwirkung auch bei einer Bewegung des Lichtfluters. Die Ausführung der Lichtquelle in einem erhöhten Ring um den Vernebler gewährleistet eine gute Ausleuchtung des Nebels. Dabei wird die aktive Fläche des Verneblers freigehalten, um die Nebelbildung nicht zu beeinträchtigen.

Der Vernebler ist günstigerweise als piezoelektrischer Ultraschallschwinger ausgeführt. Diese sind preiswert und gut gegen die Einflüsse von Wasser und Zusatzstoffen geschützt.

Ein heller Lichtfluter ergibt sich, wenn die Lichtquelle aus Halogenlampen gebildet ist. Diese sind preiswert und lassen sich einfach wechseln.

In einer anderen Ausführung sind anstelle der Halogenlampen eine Vielzahl von Leuchtdioden eingesetzt. Diese besitzen eine lange Lebensdauer und sind gegen äußere Einflüsse unempfindlich.

Dabei strahlen die Leuchtdioden vorzugsweise in weiß, um den Nebeleffekt zu unterstützen. In anderen Ausführungsformen strahlen die Leuchtdioden in rot, gelb oder grün, um eine besondere Stimmung mit dem Lichtfluter zu erreichen.

Um die Lichtquelle vor der Flüssigkeit zu schützen, ist sie unter einer transparenten Abdeckung angeordnet, die schraubbar ausgeführt ist. Damit lässt sich ein Lampenwechsel leicht durchführen.

Die Abdeckung ist vorteilhafterweise als horizontaler, nach oben gewölbter Ring ausgeführt, der in der Mitte offen ist. Damit wird die aktive Fläche des Verneblers frei gehalten und die Bildung des Nebels nicht beeinträchtigt.

Die Leitungen für die elektrische Energie für die Lichtquelle und den Vernebler sind vorteilhafterweise in dem Ständer und von unten zentral in die Schale geführt, so dass sie nicht sichtbar sind und die optische Wirkung des Lichtfluters nicht beeinträchtigen.

Der Lichtquelle und/oder dem Vernebler ist optional außen ein Leistungsregler vorgeschaltet, durch den die Helligkeit bzw. die Nebelstärke regelbar ist.

Der Flüssigkeit, vorzugsweise Wasser, sind optional wasserlösliche Aromastoffe zugefügt. Somit lässt sich ein angenehmer Duft im Raum mit diesem Lichtfluter erzeugen.

Eine ansprechende Lichtwirkung des Lichtfluters ergibt sich durch die Verwendung einer Glasschale. Durch eine Dekoration der Glasschale wird der Stimmungseindruck durch den Lichtfluter weiter verstärkt.

Durch das Auflegen einer zusätzlichen Schale mit einem Abstand oberhalb der Lichtquelle und des Verneblers auf entsprechend langen Stehbolzen wird der Lichteindruck weiter verändert und ein Spritzschutz erreicht.. Die zusätzliche Schale erzeugt auch ein Licht- und Schattenspiel des Nebels an Decken und Wänden.Die zusätzliche Schale ist abnehmbar. Dies erhöht die Verdunstung und gibt einen anderen Lichteindruck.

Um einen einheitlichen optischen Eindruck zu erhalten, ist die zusätzliche Schale aus dem gleichen Material und gegebenenfalls mit der gleichen Dekoration wie die flüssigkeitsgefüllte Schale ausgeführt.

Der Vernebler erzeugt eine gasförmige Feuchtigkeit, die von der Raumluft aufgenommen wird. Die Höhe des Ständers beträgt vorteilhafterweise über 150 cm, damit die Feuchtigkeitsaufnahme im Raum erfolgt und sie sich nicht sofort auf der Stellfläche des Ständers niederschlägt. Auch ergibt sich dadurch ein positiver optischer Eindruck, dass man nicht direkt in die Lichtquelle sehen kann.

Ausführungsformen der Erfindung sind beispielhaft in den Figuren beschrieben.
- Fig. 1: zeigt einen Querschnitt durch einen Lichtfluter;
- Fig. 2: zeigt einen Lampenhalter mit 4 Lampen;
- Fig. 3: zeigt einen Lampenhalter mit Leuchtdioden;
- Fig. 4: zeigt im Detail einen Lampenhalter um einen Vernebler.

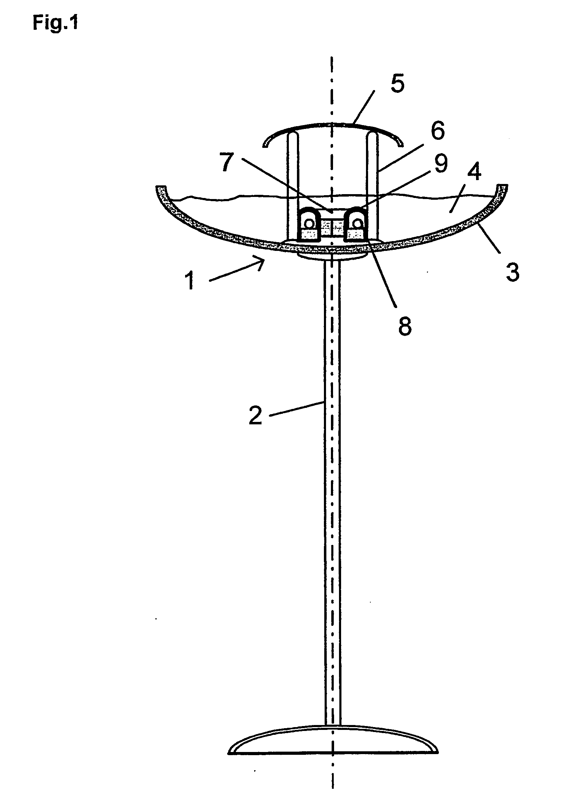

In Fig.1 ist der Lichtfluter 1 von der Seite im Schnitt dargestellt. Auf dem Ständer 2 ist die Schale 3 befestigt, die vorzugsweise lichtdurchlässig und mit einer Flüssigkeit 4 gefüllt ist. In der Mitte der Schale 3 befindet sich der Vernebler 7, der Nebel aus der Flüssigkeit 4 erzeugt. Der Vernebler 7 ist mit der Lichtquelle 8 umgeben, die die Flüssigkeit und den Nebel beleuchtet. Die Lichtquelle 8 ist durch den transparenten Leuchtring 9 vor der Flüssigkeit 4 geschützt. Neben dem Leuchtring 9 sind die Stehbolzen 6 angebracht, welche die Zusatzschale 5 auf Abstand über dem Leuchtring 9 halten.

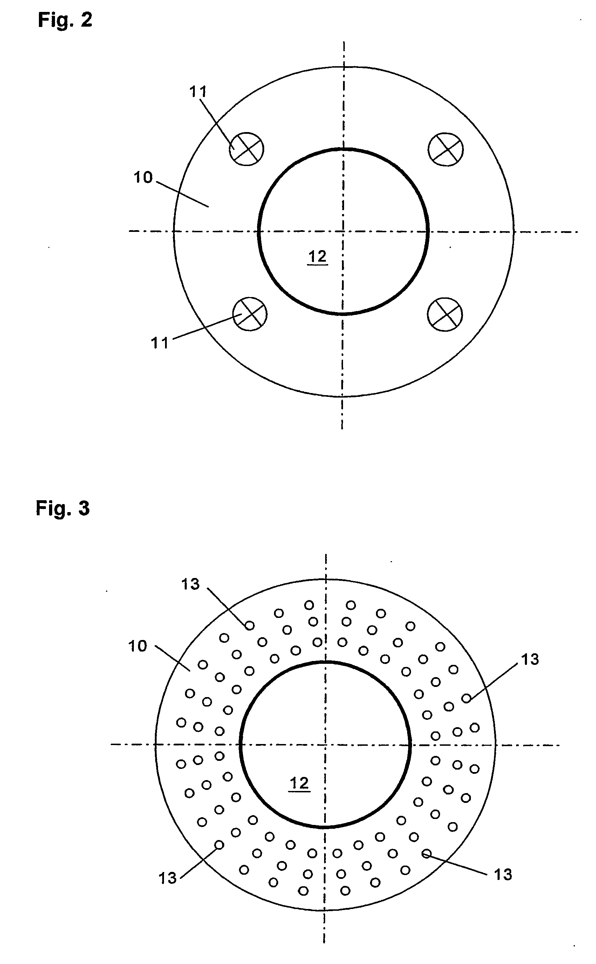

In Fig. 2 ist der Lampenhalter 10 in Draufsicht gezeigt. Er hält die Lichtquellen, in diesem Fall vier Lampen, die beispielsweise Niedervolt-Halogenlampen sind. Die Lampen 11 sind gleichmäßig auf dem Lampenhalter 10 verteilt, um eine gleichmäßige Ausleuchtung zu erhalten. In der Mitte de Lampenhalters 10 ist die aktive Fläche 12 des Verneblers freigehalten. Hier wird der Nebel erzeugt und nach oben abgegeben.

In Fig. 3 ist ein Lampenhalter 10 mit einer Vielzahl von Leuchtdioden 13 dargestellt, die gleichmäßig auf dem Lampenhalter verteilt sind. Sie ergeben eine gleichmäßige Ausleuchtung. Auch hier ist die aktive Fläche 12 des Verneblers freigehalten.

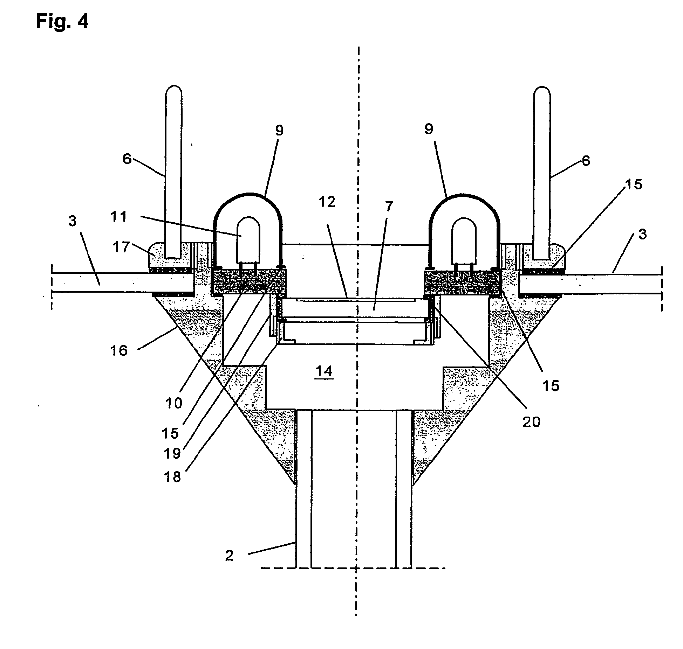

In Fig. 4 ist ein detaillierter Schnitt durch die Mitte des Lichtfluters gezeigt. An dem Ständer 2 befindet sich der Schalenhalter 16, auf dem die Schale 3 mittels des Befestigungsringes 17 und den Dichtungen 15 befestigt ist. Der Befestigungsring 17 ist auf den Schalenhalter 16 geschraubt und in ihn sind auch die Stehbolzen 6 eingelassen, die zur Ablage der Zusatzschale dienen. Der Lampenhalter 10 liegt auf einem Absatz des Schalenhalters 16 und er trägt die Lampen 11. Die Lampen 11 sind durch den Leuchtring 9 geschützt, der innen in den Schalenhalter 16 geschraubt ist. Dabei ist der Innenraum für diem Lampen 11 durch Dichtungen 15 abgedichtet. In der Mitte des Leuchtringes 9 befindet sich der Vernebler 7 mit seiner aktiven Fläche 12. Der Vernebler 7 ist mit dem Schraubring 18 in dem Halter 19 und in die Dichtung 20 eingespannt. Unter dem Vernebler 7 bleibt der Raum 14 für die Kabelzuführung zum Vernebler 7 und den Lampen 11 frei.

Bezugszeichen
- 1: Lichtfluter
- 2: Ständer
- 3: Schale
- 4: Flüssigkeit
- 5: Zusatzschale
- 6: Stehbolzen
- 7: Vernebler
- 8: Lichtquelle
- 9: Leuchtring
- 10: Lampenhalter
- 11: Lampen
- 12: Aktive Fläche Vernebler
- 13: Leuchtdioden
- 14: Kabelzuführungsraum
- 15: Dichtung
- 16: Schalenhalter
- 17: Befestigungsring
- 18: Einschraubring
- 19: Haltering

## Patentansprüche

1. Lichtfluter in einer flüssigkeitsgefüllten Schale (3) mit einem mittig angeordneten Vernebler (7), wobei eine daran fest installierte Lichtquelle (8) in einem transparenten, horizontalen Ring (9) um den Vernebler (7) erhöht angebracht ist und eine aktive Fläche (12) des Verneblers (7) freigehalten ist, **dadurch gekennzeichnet, daß**
- der Lichtfluter auf einem Ständer (2) mit einem Schalenhalter (16) abgedichtet verschraubt mittig befestigt ist,
- der Ring (9) sich nach oben gewölbt über einen Lampenhalter (10) erstreckt und diesen mittels Dichtungen (15) abgedichtet im Schalenhalter verschraubt umschließt,
- der Vernebler (7) in eine Dichtung (20) eingespannt mit einem Schraubring (18) unter dem Lampenhalter (10) gehalten ist und
- **dadurch** unter dem Vernebler (7) sowie unter dem Lampenhalter (10) in dem Schalenhalter (16) ein abgedichteter Raum (14) für eine Kabelzuführung freigehalten ist, deren Leitungen durch den Ständer (2) geführt sind.

2. Lichtfluter nach Anspruch 1, **dadurch gekennzeichnet, dass** der Vernebler (7) als piezoelektrischer Ultraschallschwinger ausgeführt ist.

3. Lichtfluter nach Anspruch 1, **dadurch gekennzeichnet, dass** die Lichtquelle (8) aus mindestens einer Halogenlampe (11) gebildet ist.

4. Lichtfluter nach Anspruch 1, **dadurch gekennzeichnet, dass** die Lichtquelle (8) aus einer Vielzahl von Leuchtdioden (13) gebildet ist.

5. Lichtfluter nach Anspruch 4, **dadurch gekennzeichnet, dass** die Leuchtdioden (13) weiß strahlen.

6. Lichtfluter nach Anspruch 4, **dadurch gekennzeichnet, dass** die Leuchtdioden (13) rot, gelb oder grün stahlen.

7. Lichtfluter nach Anspruch 1, **dadurch gekennzeichnet, dass** die Lichtquelle (8) und der Vernebler (7) durch eine Zusatzschale (5) oben beabstandet überdeckt sind, die auf Stehbolzen (6) abnehmbar aufgelegt ist.

8. Lichtfluter nach Anspruch 7, **dadurch gekennzeichnet, dass** die Zusatzschale (5) aus dem gleichen Material wie die Schale (3) gefertigt ist.

9. Lichtfluter nach Anspruch 1, **dadurch gekennzeichnet, dass** die Höhe des Ständers (2) über 150 cm beträgt, und die Schale (3) einen Durchmesser zwischen 40 und 100 cm besitzt.

10. Lichtfluter nach Anspruch 1, **dadurch gekennzeichnet, dass** der Lichtquelle (8) und/oder dem Vernebler (7) ein Leistungsregler vorgeschaltet ist.

11. Lichtfluter nach Anspruch 1, **dadurch gekennzeichnet, dass** der Flüssigkeit wasserlösliche Aromastoffe zugesetzt sind.

12. Lichtfluter nach Anspruch 1, **dadurch gekennzeichnet, dass** die Schale (3) aus Glas gefertigt ist.

13. Lichtfluter nach Anspruch 12, **dadurch gekennzeichnet, dass** die Schale (3) dekoriert ist.

## Claims

1. Floodlight in a fluid-filled shell (3) with a medially arranged atomiser (7), whereby a light source (8) is permanently installed in a transparent, horizontal ring (9) around the atomiser (7) on a superior level, and an active surface (12) of the atomiser (7) is maintained free,
**characterized in that**
- the floodlight is mounted centrally on a stand (2) with a shell holder (16), screw-fixed in a sealing manner.
- the ring (9) extends upwards in an arch above a bulb holder (10) and encloses the above in a sealing manner by means of screwing into the shell holder with seals (15).
- the atomiser (7) is tensioned in a seal (20) and fixed with a screw ring (18) below the bulb holder (10).
- a sealed space (14) for cable introduction is thus retained below the atomiser (7) and below the bulb holder (10) in the shell holder (16), the lines of which run through the stand (2).

2. Floodlight according to claim 1, **characterized in that** the Atomiser (7) is a piezoelectric ultrasonic transmitter.

3. Floodlight according to claim 1, **characterized in that** the light source (8) consists of at least one halogen bulb (11).

4. Floodlight according to claim 1, **characterized in that** the light source (8) is formed by a large number of light emitting diodes (13).

5. Floodlight according to claim 4, **characterized in that** the light emitting diodes (13) radiate white light.

6. Floodlight according to claim 4, **characterized in that** the light emitting diodes (13) radiate red, yellow or green light.

7. Floodlight according to claim 1, **characterized in that** the light source (8) and the atomiser (7) are covered by an additional shell (5), which is placed at a distance above them on a stay bolt (6) in a removable manner.

8. Floodlight according to claim 7, **characterized in that** the additional shell (5) is made from the same material as the shell (3).

9. Floodlight according to claim 1, **characterized in that** the height of the stand (2) amounts to more than 150 cm, and that the shell (3) has a diameter between 40 and 100 cm.

10. Floodlight according to claim 1, **characterized in that** an output regulator is connected upstream of the light source (8) and/or the atomiser (7).

11. Floodlight according to claim 1, **characterized in that** water-soluble flavours are added to the fluid.

12. Floodlight according to claim 1, **characterized in that** the shell (3) is made from glass.

13. Floodlight according to claim 12, **characterized in that** the shell (3) is decorated.

## Revendications

1. Projecteur dans une cuvette remplie de fluide (3) avec un atomiseur (7) disposé au centre, et avec une source lumineuse (8) qui est installée de manière non détachable et placée dans un anneau transparent horizontal (9) autour de l'atomiseur (7) à un niveau supérieur, et une surface active (12) de l'atomiseur (7) est maintenue libre, **caractérisé en ce que**
- le projecteur est monté centralement sur un pilier (2) avec un support de cuvette (16), serré a vis d'une façon étanche.
- l'anneau (9) envoûté vers le haut s'étend au-dessus d'un support d'ampoule (10) et enferme celui-ci dans le support de cuvette (16) serré à vis et rendu étanche par des joints (15).
- l'atomiseur (7) est encastré dans un joint (20) et fixé avec un anneau fileté (18) au-dessous du support d'ampoule (10).
- un espace scellé (14) est ainsi maintenu libre au-dessous de l'atomiseur (7) et au-dessous du support d'ampoule (10) dans le support de cuvette (16), pour l'introduction des câbles, dont les lignes sont conduites à l'intérieur du pilier (2).

2. Projecteur selon la revendication 1, **caractérisé en ce que** l'atomiseur (7) est réalisé en forme d'un émetteur d'ultrasons piézoélectrique.

3. Projecteur selon la revendication 1, **caractérisé en ce que** la source lumineuse (8) se compose au moins d'une ampoule à halogène (11).

4. Projecteur selon la revendication 1, **caractérisé en ce que** la source lumineuse (8) est constituée par un grand nombre de diodes électroluminescentes (13).

5. Projecteur selon la revendication 4, **caractérisé en ce que** les diodes électroluminescentes (13) rayonnent de la lumière blanche.

6. Projecteur selon la revendication 4, **caractérisé en ce que** les diodes électroluminescentes (13) rayonnent de la lumière rouge, jaune ou verte.

7. Projecteur selon la revendication 1, **caractérisé en ce que** la source lumineuse (8) et l'atomiseur (7) sont couverts par une cuvette additionnelle (5), qui est placée à une distance au-dessus de ces dernières sur une vis d'écartement (6) d'une façon démontable.

8. Projecteur selon la revendication 7, **caractérisé en ce que** la cuvette additionnelle (5) est faite du même matériel que la cuvette (3).

9. Projecteur selon la revendication 1, **caractérisé en ce que** la taille du pilier (2) s'élève à plus de 150 centimètres, et la cuvette (3) possède un diamètre entre 40 et 100 centimètres.

10. Projecteur selon la revendication 1, **caractérisé en ce qu'**un régulateur de rendement est connecté en série avec la source lumineuse (8) et/ou l'atomiseur (7).

11. Projecteur selon la revendication 1, **caractérisé en ce que** des substances aromatiques hydrosolubles sont ajoutées au fluide.

12. Projecteur selon la revendication 1, **caractérisé en ce que** la cuvette (3) est faite du verre.

13. Projecteur selon la revendication 12, **caractérisé en ce que** la cuvette (3) est décorée.
